# DEMANDE DE BREVET EUROPEEN

(11) **EP 1 426 128 A1**
(43) Date de publication de la demande: **09.06.2004**
(21) Numéro de dépôt: 03292936.6
(22) Date de dépôt: 26.11.2003
(51) Int. Cl.: B23B 27/06

(54) **Plaquette de coupe étagée**

(30) Priorité: 02.12.2002 FR 0215122
(71) Demandeur: Safety- Fabrique de Carbure de Tungstène et d'Outillages, 92100 Boulogne Billancourt (FR)
(72) Inventeur: Fouquer, Richard, 37540 Saint-Cyr-sur-Loire (FR)
(74) Mandataire: Lepeudry-Gautherat, Thérèse

(57) **Abrégé**

La plaquette de filetage (10) comprend une dent (30) latérale comportant une face avant (31), de taille et de repoussement de copeaux, délimitée par une arête de coupe (31A) la séparant d'une zone de flanc (33) à profil présentant un angle de dépouille déterminé (D), et comportant, en arrière d'un volume antérieur (30A) supportant directement l'arête de coupe (31A) et limité par la zone de flanc (33) s'étendant sur une épaisseur limitée (h1), un contrefort (30B) du volume antérieur (30A), présentant un profil (36) à angle moyen de dépouille (E) différent, et inférieur pour un taraudage, de l'angle de dépouille global (D) de la zone de flanc (33).

## Description

La présente invention concerne les plaquettes de coupe destinées à la taille des filetages, internes et externes.

Une telle plaquette de coupe présente une face frontale se déplaçant sensiblement perpendiculairement à la surface à tailler, pour la racler, avec en outre une translation d'avance axiale, par une ou plusieurs dents d'extension latérale formant une sorte de râteau taillant des sillons. Les copeaux sont taillés par une arête de coupe à profil frontal globalement en V ou U, délimitant une face avant rectifiée de la dent contre laquelle glissent les copeaux. L'arête de coupe est bordée par les flancs de la dent, présentant classiquement, sur toute l'épaisseur de la plaquette, une qualité de fini de surface contrôlée, obtenue par rectification ou moulage soigné, avec un angle de dépouille déterminé, positif ou nul, pour éviter tout frottement parasite du talon, en arrière de la dent, sur respectivement le taraudage ou le filetage.

La plaquette, fixée par une vis centrale à un support d'outil, doit présenter une épaisseur suffisante pour résister, sans déformation excessive, au couple de flexion correspondant à la force périphérique de découpe des copeaux. Surtout, la dent doit présenter une épaisseur suffisante pour résister, sans écaillage prématuré, à la contrainte localisée de taille des copeaux. De façon classique, l'épaisseur de la plaquette est d'au moins 3 mm et elle peut atteindre environ 6 mm.

Toutefois, cette épaisseur ne peut être accrue excessivement car la plaquette serait inutilisable pour le taraudage de trous de diamètre limité, du fait du contact du talon de la dent sur le bord de l'ajutage travaillé. On pourrait songer à augmenter l'angle de dépouille, c'est-à-dire réduire l'angle de taillant du profil latéral de l'arête de coupe, mais celle-ci deviendrait trop fragile et risquerait de s'ébrécher du fait du porte-à-faux accru, c'est-à-dire si la partie arrière de la dent n'assurait qu'un contrefort insuffisant.

Dans le cas d'une application pour filetage externe, l'angle de dépouille peut certes être quasiment nul et l'épaisseur être relativement importante, mais l'arête de coupe reste sensible aux contraintes externes localisées dans cette zone, comme par exemple les vibrations.

Par ailleurs, lors de la fabrication de la plaquette, l'obtention de la qualité voulue des flancs de la dent est coûteuse.

La présente invention vise à proposer une solution visant à traiter au moins l'un des problèmes indiqués ci-dessus, c'est-à-dire la résistance aux contraintes mécaniques, l'encombrement en épaisseur et le coût de fabrication, afin d'au moins atténuer l'inconvénient correspondant.

A cet effet, l'invention concerne une plaquette de filetage comprenant une dent en saillie latérale comportant une face avant, de taille et de repoussement de copeaux, délimitée par une arête de coupe la séparant d'une zone de flanc à profil présentant un angle de dépouille global déterminé, caractérisée par le fait que la dent comporte, en arrière d'une partie de volume antérieur supportant directement l'arête de coupe et limitée par la zone de flanc s'étendant sur une épaisseur limitée, une partie servant de contrefort de la partie de volume antérieur, présentant un profil à angle moyen de dépouille différent de l'angle de dépouille global du profil de la zone de flanc.

Ainsi, la dent comporte fonctionnellement deux couches superposées qui coopèrent pour supporter l'arête de coupe, puisque la partie de contrefort constitue un piédestal fournissant sa contribution, pour supporter l'arête de coupe, à travers la partie antérieure.

Comme la partie antérieure, ou couche frontale, présente une épaisseur limitée, inférieure à l'épaisseur totale de la plaquette, il est facile de prévoir que l'angle de dépouille de la partie antérieure soit limité à une faible valeur, ou même qu'il soit nul, c'est-à-dire prévoir un angle de taillant maximal, donc avec une masse de matière maximale derrière la face avant.

Dans le cas d'un taraudage, le risque d'un frottement parasite du talon de la partie de contrefort sur la surface d'un alésage de diamètre limité peut être évité, puisque ce talon peut rester, grâce à un angle accru de dépouille "positive" de la partie de contrefort, en retrait et inscrit dans le cercle représentant la section de l'alésage. Le porte-à-faux de l'arête de coupe peut donc être limité puisque son amplitude est proportionnelle à l'angle de dépouille et à l'épaisseur de la partie antérieure. La face avant de la dent est ainsi étayée sensiblement perpendiculairement par la matière, de la partie antérieure, située quasiment derrière toute la face avant de taille. Comme le porte-à-faux est limité, une épaisseur de partie antérieure de dent même limitée assure déjà localement une bonne solidité à l'arête de coupe, sans le secours de la couche de piédestal de contrefort.

Dans le cas d'un filetage externe, l'angle de dépouille moyen de la partie de contrefort peut être choisi négatif, c'est-à-dire que la partie de contrefort peut se présenter sous la forme d'un rostre destiné à épouser sensiblement la courbure de la pièce usinée.

En pareil cas, la partie de contrefort peut présenter un angle moyen de dépouille inférieur à l'angle de dépouille global de la zone de flanc.

En particulier alors, l'angle de dépouille moyen de la partie de contrefort est de préférence négatif pour que la partie de contrefort forme le rostre, destiné à sensiblement épouser une courbure de pièce à surface externe cylindrique à fileter, le rostre s'étendant latéralement, vers la pièce à fileter, plus loin qu'un point de jonction entre la zone de flanc de la partie antérieure et une zone de flanc homologue présentant le dit profil de la partie de contrefort.

De façon préférée, le rostre s'étend latéralement, vers la pièce à fileter, plus loin que l'arête de coupe.

Dans les deux cas, de taraudage ou de filetage, la partie de contrefort assure ainsi un complément de résistance aux contraintes mécaniques, sa masse s'ajoutant à celle du reste de la dent pour ainsi augmenter l'inertie de la dent, et donc réduire l'amplitude des vibrations locales, et en particulier augmenter la résistance à la flexion de la dent contre la force de pression exercée par les copeaux plaqués sur la face avant.

En bref, la partie antérieure, active, de la dent est enracinée d'un seul tenant à la fois, latéralement, dans la couche antérieure de la plaquette, qui lui fournit un couple de résistance à la flexion, et, dans le sens de l'épaisseur, elle est enracinée dans la couche de contrefort, qui lui fournit une force de contre-appui la repoussant vers l'avant.

Le coût de fabrication de la plaquette peut être limité puisque la qualité contrôlée de surface de flanc ne concerne qu'une épaisseur limitée.

Pour le taraudage, la partie de contrefort présente un retrait latéral, par rapport à la partie de volume antérieur, correspondant à un angle moyen de dépouille qui est supérieur à l'angle de dépouille global de la zone de flanc.

Dans une forme de réalisation intéressante, le profil de la partie de contrefort correspond à une courbe géométrique déterminée qui se raccorde directement à une extrémité arrière du profil de la zone de flanc.

Dans une autre forme de réalisation intéressante, le profil de la partie de contrefort se raccorde, à une extrémité arrière du profil de la zone de flanc, par un tronçon de courbe à dépouille en décrochement, présentant un angle moyen de dépouille représentant un extremum par rapport au reste du profil de la partie de contrefort, reste à dépouille de même signe que l'extremum ou de signe opposé, pour un extremum de recul du profil, suivi d'une avancée en rostre.

En pareil cas, le dit reste du profil de la partie de contrefort peut présenter un angle moyen de dépouille supérieur, égal, voire même inférieur à l'angle de dépouille globale de la zone de flanc, puisque le décrochement permet d'assurer la garde voulue du talon par rapport à la pièce usinée.

Le tronçon de courbe à dépouille en décrochement présente de préférence un décrochement à extension latérale comprise entre 1 et 50 % d'une valeur de hauteur latérale de la dent. Le profil de la zone de flanc peut par exemple être droit ou bien curviligne.

Dans une forme de réalisation préférée, la partie de volume antérieur de la dent présente une épaisseur comprise entre 10 et 50 % d'une valeur d'épaisseur de la plaquette.

Lorsque la zone de flanc présente diverses surfaces s'étendant sensiblement dans des plans respectifs inclinés selon des angles de biseau différents par rapport à une direction de pénétration perpendiculaire à une surface de la pièce à usiner, l'angle de dépouille de la zone de flanc suit une loi croissante en fonction de l'angle de biseau, représentant par exemple sensiblement le sinus de l'angle de biseau. La loi peut comporter une constante de seuil minimum, à titre de garde minimale.

Le profil de la partie de contrefort peut correspondre, selon une loi déterminée de résistance à une flexion en arrière due à la taille, à une courbe lissée de moment d'inertie en flexion, en fonction d'une position courante en hauteur dans la dent, la courbe lissée présentant des ruptures de pente limitées à un valeur de seuil haut.

On limite ainsi les contraintes localisées dues aux forces de flexion et aux vibrations.

La partie de contrefort se raccorde avantageusement, à une extrémité arrière du profil de la zone de flanc, par un tronçon de courbe à dépouille en décrochement, présentant un profil en S, à extrémités sensiblement alignées avec respectivement la dite extrémité arrière et le reste du profil de la partie de contrefort.

L'absence de point anguleux dans le profil global limite ainsi les ruptures de pente du moment d'inertie.

La dent peut en particulier présenter latéralement un angle de biseau d'élargissement déterminé à partir d'une arête de pointe de bec et la partie de contrefort de la dent comporte deux flancs à angle de dépouille variable selon une loi de croissance variant dans le même sens que le dit élargissement, et agencée pour lisser la dite courbe, de moment d'inertie, par compensation, au moins partielle, du dit élargissement. La partie de volume antérieur de la dent peut en outre présenter une épaisseur variable selon une loi lissage agencée pour compenser, au moins partiellement, des variations du moment d'inertie dues au dit élargissement et à l'angle de dépouille variable des deux flancs de la partie de contrefort.

L'invention sera mieux comprise à l'aide de la description détaillée suivante de deux formes de réalisation intéressantes de la plaquette de l'invention, utilisable dans ces exemples pour un filetage externe ou un taraudage, en référence aux dessins annexés, sur lesquels :
- la figure 1 est une vue partielle d'une section transversale d'un alésage en cours de taraudage par une plaquette de filetage selon la première forme de réalisation de l'invention,
- la figure 2 est une vue en perspective de la plaquette de la figure 1,
- la figure 3 est une vue dilatée de la zone entourée par un cercle sur la figure 1, montrant une dent de la plaquette, de profil latéral déterminé.
- la figure 4 équivaut à la figure 3 et correspond à la seconde forme de réalisation, pour une dent ayant un autre profil latéral, et
- la figure 5 représente une courbe d'évolution du moment d'inertie de la plaquette.

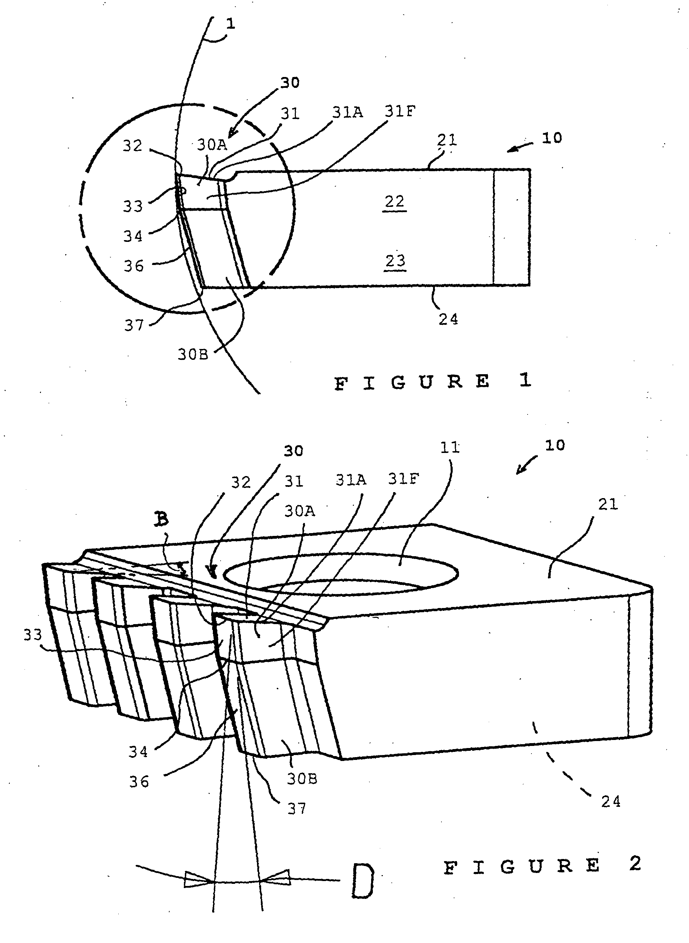

Les figures 1, 3 et 2 représentent, respectivement en coupe transversale et en perspective, une plaquette 10 en position de taraudage d'un ajutage circulaire 1 d'une pièce à usiner. La plaquette 10 est ici percée d'un trou 11, ici vertical, de réception d'une vis de fixation amovible à un porte-outil, non représenté.

La plaquette 10 présente ici une forme sensiblement parallélépipédique rectangle, avec une face ou surface avant 21 et une face ou surface arrière 24. Pour la commodité de l'exposé, les faces 21 et 24 sont ici supposées horizontales. L'une de quatre dents latérales à extension horizontale visibles sur la figure 2 est référencée 30 sur les figures 1 à 3. La dent 30 présente une hauteur déterminée de taille représentée par son extension latérale, en saillie d'un plan virtuel de référence, sensiblement vertical sur les figures, tangent aux fonds de gorges séparant les dents. La dent 30 comporte une face avant 31, ou face de taille, faisant partie de la face avant 21, mais qui a subi une rectification pour la creuser légèrement en oblique vers le centre de la face avant 21 afin de faciliter le glissement de copeaux dans cette direction.

Comme le montre la figure 2, la face de taille 31 est limitée par une arête de coupe 31A ici sensiblement en forme de bec à profil frontal globalement en V, et précisément ici en U dont la base est une arête d'extrémité ou pointe de bec 32 légèrement pointée vers l'avant (fig. 1) par rapport à la face avant 21, comme évoqué ci-dessus. La face de taille 31 limite frontalement un volume de partie antérieure 30A de la dent 30, limité latéralement par une zone ou bord de flanc à surface présentant une qualité de fini déterminée, ici par rectification, constituée par le prolongement de l'arête de coupe 31A vers la face arrière 24. La zone de flanc rectifiée est constituée par des flancs 31F du U, y compris son flanc de fond 33 qui constitue une surface d'arête sommitale de la partie antérieure 30A, prolongeant vers l'arrière l'arête de bout de bec 32 en formant une traîne partant donc de l'arête de pointe de bec 32 et s'étendant jusqu'à une extrémité arrière 34 sur une longueur correspondant à une épaisseur limitée de dent h1, ici d'environ un tiers de l'épaisseur totale de la plaquette 10. Dans d'autres exemples préférés, l'arête sommitale 33 présente une longueur h1 comprise entre 10 et 50 % de l'épaisseur totale de la plaquette 10.

L'arête sommitale 33 présente un angle de dépouille D de la partie antérieure 30A de la dent 30 par rapport à la direction, ici verticale, d'avance de la plaquette 10 relativement à la pièce travaillée, et l'arête de pointe de bec 32, définie par la face avant de taille 31 et l'arête sommitale 33, présente ainsi un angle de saillant T à profil latéral légèrement aigu. Les deux flancs opposés 31F du U présentent aussi un angle de dépouille, qui peut toutefois être limité sans problème, puisque le risque de frottement de talon arrière lié à la courbure de l'ajutage ne se pose que pour l'arête sommitale 33, s'étendant dans le plan de la figure 1, transversal à l'ajutage. Dans cet exemple, les flancs 31F et le fond 33 du U ont été rectifiés selon des surfaces planes respectives, si bien que l'angle de dépouille reste constant sur toute l'épaisseur de la surface latérale considérée. Sinon, il faudrait considérer une valeur globale, ou moyenne, de l'angle de dépouille.

L'arête de pointe de bec 32 présente donc un porte-à-faux latéral, par rapport à l'extrémité arrière 34 de l'arête sommitale 33, qui est proportionnel à la tangente de l'angle de dépouille "antérieure" D et à la longueur h1 de l'arête sommitale 33. L'angle de dépouille antérieure D est ici très réduit pour limiter le porte-à-faux et vaut environ cinq à six degrés.

De façon générale, la dent 30, et plus généralement la plaquette 10, est fonctionnellement divisée en deux couches superposées, qui sont toutefois d'un seul tenant. Ainsi, la référence 22 désigne globalement une couche ou volume antérieur de la plaquette 10, comprenant la partie antérieure 30A de la dent 30, la couche antérieure 22 étant limitée par un plan virtuel horizontal, parallèle au plan de la face avant 21 et contenant l'extrémité arrière 34 de l'arête sommitale 33. La couche antérieure 22 présente donc une épaisseur sensiblement égale à h1. La référence 23 désigne le reste de la plaquette 10, c'est-à-dire une couche postérieure formant un piédestal, d'épaisseur h4, de contrefort de la partie antérieure 30A de la dent 30, et aussi du reste de la couche antérieure 22.

La dent 30 s'étend ainsi dans la couche postérieure 23, sous la forme d'une partie postérieure 30B, de piédestal ou racine de contre-appui, qui présente globalement le profil frontal en U de la partie antérieure 30A. Toutefois, la partie postérieure 30B est en retrait latéral par rapport à un prolongement virtuel du segment de droite de l'arête sommitale 33, c'est-à-dire qu'elle présente globalement un angle de dépouille moyen supérieur à l'angle de dépouille antérieure D, de façon à présenter un écart accru de garde par rapport à la pièce à tailler en vue d'éviter tout frottement d'un talon 37 de la face arrière 24.

A cet effet, l'arête sommitale 33, antérieure, se poursuit, au-delà de son extrémité arrière 34, vers la face arrière 24, par une arête sommitale postérieure 36 qui présente ici globalement la forme de l'arête sommitale antérieure 33, c'est-à-dire un segment de droite, mais avec un angle de dépouille "postérieure" E supérieur à l'angle de dépouille antérieure D, et valant ici environ dix degrés. Le talon 37 est déterminé par l'extrémité arrière de l'arête sommitale postérieure 36.

En variante, le profil global des deux arêtes sommitales 33 et 36 peut être considéré comme une portion de cercle, ou courbe arrondie du même genre, à tronçon antérieure 33 rectifié, droit ou courbe, le talon (37) restant dégagé de la surface de l'ajutage à tailler tant que le rayon de ce dernier dépasse celui de la portion de cercle. De préférence, l'arête sommitale antérieure 33 présente une courbure convexe pour assurer un support optimal de l'arête de coupe 31A.

Comme évoqué au début, l'angle de dépouille antérieure D peut être nul si, en variante, l'application concerne un filetage externe. En pareil cas, le risque de frottement du talon 37 étant inexistant, la partie postérieure 30A peut ne présenter qu'un très faible angle de dépouille postérieure E, c'est-à-dire assurer un contre-appui très efficace tout en ne nécessitant pas de rectification puisqu'elle présente un retrait supérieur à un seuil minimal de garde.

Dans le cas d'un filetage d'un cylindre de diamètre déterminé, la partie postérieure 30B présenterait un profil à angle de dépouille global avançant, ou "négatif". Ce peut être par exemple en arc de cercle parallèle à la surface travaillée pour l'envelopper avec une garde minimale, c'est-à-dire avec un talon 37 faisant latéralement saillie au-delà du point de jonction 34 des deux arêtes sommitales 33, 36 ou même de l'arête de pointe de bec 32.

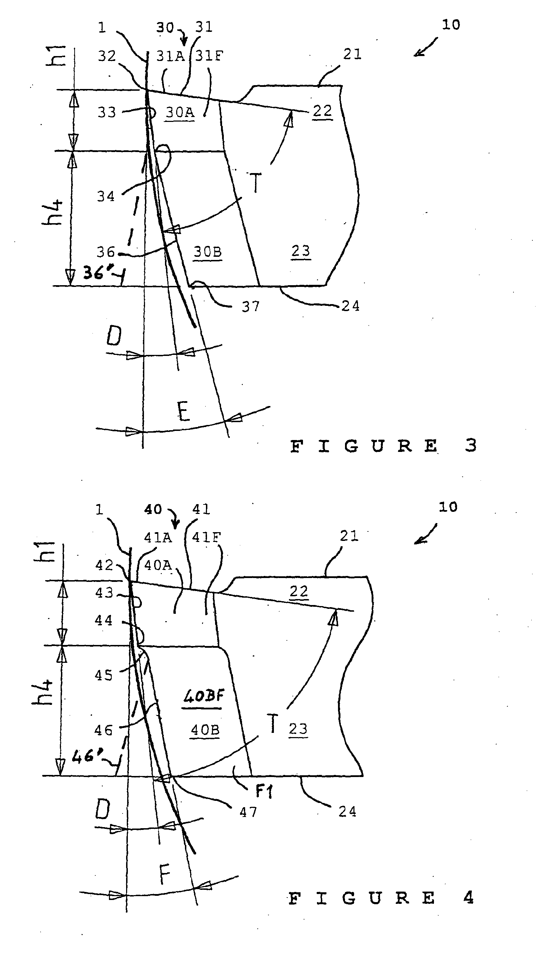

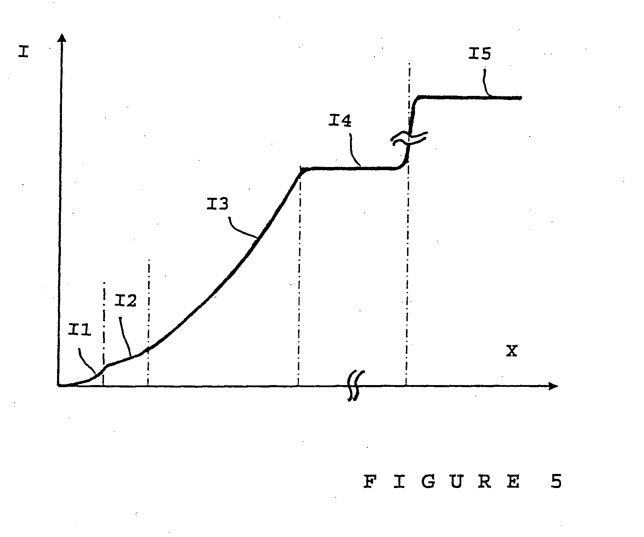

La figure 4, exposant la variante, comporte des éléments 21, 24, 40, 40A, 40B, 41A, 41F, 41 à 44 et 46, 47 homologues des éléments de la figure 3 qui ont la même référence d'unité, mais avec, le cas échéant, la dizaine "4" qui remplace la dizaine "3". De ce fait, l'explication suivante ne porte que sur un élément nouveau, qui est un court tronçon 45 d'arête sommitale postérieure destiné à raccorder l'extrémité arrière 44, de l'arête sommitale antérieure 43 de la partie antérieure 40A, au tronçon d'arête sommitale postérieure 46 de la partie postérieure 40B, de piédestal. Le tronçon de raccordement 45, ici concave, présente globalement un angle de dépouille supérieur à un angle de dépouille F du tronçon d'arête sommitale postérieure 46, lui-même supérieur à l'angle de dépouille antérieure D.

Le tronçon d'arête sommitale postérieure 46 se trouve ainsi "rapidement" déporté en retrait de la pièce taillée lorsqu'on passe de l'arête sommitale antérieure 33 au tronçon d'arête sommitale postérieure 46. Grâce à cette marge "initiale" de garde par rapport à la pièce taillée, l'angle de dépouille F pourrait, en variante, être égal voire inférieur à l'angle de dépouille antérieure D, dans la mesure où l'angle de dépouille défini par les extrémités 44 et 47 de l'arête sommitale postérieure 45, 46 reste supérieur à l'angle de dépouille antérieure D.

Le tronçon de courbe de dépouille en décrochement 45 présente ici une extension latérale d'environ 5 % de la valeur de hauteur latérale de la face frontale de taille 41, extension qui, dans d'autres cas, est de préférence comprise entre 1 et 50 % de la hauteur de la dent 40.

Le même genre de profil, présentant une discontinuité ou rupture de pente 45, se retrouve au niveau de l'extrémité arrière de raccordement de chacun des deux flancs 41F du U de la partie antérieure 40A avec deux flancs respectifs d'un U de la partie postérieure 40B, c'est-à-dire que le type de profil représenté sur la figure 4 resterait valable si l'on faisait tourner le plan vertical de coupe de la dent 40 autour d'une verticale. Comme évoqué plus haut, la discontinuité 45 peut toutefois être réduite progressivement à mesure que l'on s'écarte d'un plan de représentation en coupe, passant par l'arête sommitale 43, comme sur la figure 4, et perpendiculaire à la surface de attaquée de la pièce.

En effet, la pénétration dans la pièce à usiner est maximale pour l'arête de pointe de bec 42, qui se déplace vers la gauche, donc perpendiculairement à sa direction d'extension, horizontale parallèle au plan vertical de la surface attaquée et en outre perpendiculaire au plan de la figure 4. Par contre, les flancs 41F ou branches du U, sont rabattus, selon un angle atteignant ici presque 90 degrés, par exemple ici d'environ 85 degrés, dans globalement un plan de direction oblique par rapport à la direction d'extension de l'arête de pointe de bec 42, et donc aussi par rapport à la surface à usiner. Les flancs 41F présentent donc une composante d'attaque de pénétration réduite selon le cosinus de l'angle de repli, d'environ 85 degrés. L'épaisseur de pénétration est donc réduite de même, ce qui autorise une dépouille moindre, réduite en fonction de l'angle de repli, et par exemple variant sensiblement comme le cosinus de l'angle de repli.

En d'autres termes, et en prenant comme référence la direction d'attaque normale (horizontale sur la figure 4) et non plus la direction d'extension de l'arête de pointe de bec 42 (perpendiculaire au plan de la figure 4), la zone de flanc 43, 43F présente diverses surfaces, frontale et latérales, s'étendant sensiblement dans des plans respectifs inclinés selon des angles de biseau B (90d - angle de repli) différents, avec respectivement un angle de biseau B valant 90 degrés pour l'arête de pointe de bec 42 et valant ici 5 degrés pour les deux flancs 41F, par rapport à la direction de pénétration perpendiculaire à une surface de la pièce à usiner. L'angle de dépouille D de la zone de flanc 43, 43F suit une loi croissante en fonction de l'angle de biseau B mesuré par rapport à la direction d'attaque normale. La loi de croissance peut alors représenter sensiblement le sinus de l'angle de biseau B sur la direction d'attaque. A titre de garde de sécurité, il peut être prévu d'ajouter une valeur constante de seuil minimal à la valeur ainsi calculée, ou uniquement de l'écrêter en valeur minimale.

L'exposé ci-dessus relatif à la variation de l'angle de dépouille D est aussi valable pour la réalisation selon les figures 1 à 3.

Dans les deux exemples ci-dessus, les profils latéraux de dent sont rectilignes. En variante, comme évoqué plus haut, ils peuvent avoir une forme autre, par exemple curviligne ou même circulaire, le profil 36, 46 de la partie postérieure 30B, 40B étant en retrait par rapport au prolongement virtuel, de l'arête sommitale antérieure 33, 43, défini par une loi géométrique définissant le profil latéral considéré. L'angle de dépouille antérieure D ou postérieure E à considérer est alors l'angle moyen, ou global, de dépouille.

Dans le cas d'un filetage externe, les profils latéraux des parties postérieures 30B et 40B seraient situés dans une position sensiblement symétrique par rapport au plan, vertical sur les figures, contenant le point de jonction 34, 44, c'est-à-dire que le talon 37, 47 formerait un rostre, à angle de dépouille E, F négatif, s'étendant latéralement au-delà du point de jonction 34, 44, et, de préférence, au-delà de l'arête de pointe de bec 32, 42. Les lignes en pointillés 36', 46' représentent ainsi la position de variante en rostre du profil 36, 46 ayant tourné d'un certain angle autour de son raccordement avec le tronçon courbe 33, 45. Éventuellement, le profil 33, 43 de la partie antérieure 30A, 40A peut de même présenter un angle de dépouille D nul, voire négatif.

La plaquette 10, et en particulier la dent 40, constitue, d'un point de vue mécanique, une poutre présentant un profil latéral, en coupe verticale de section droite sur la figure 4, tel que son moment d'inertie I, c'est-à-dire le moment ou couple de résistance à la flexion se manifestant par le recul vers le bas de l'arête de coupe 41A en cours de taille, croît de façon quadratique en fonction de l'épaisseur considérée. L'épaisseur courante peut donc être spécifiée en fonction d'une variable qui, sur la figure 5, est la distance X entre un point courant et un point de référence qui est l'arête de pointe de bec 42, en allant vers la base de la dent 40, c'est-à-dire sensiblement vers le trou 11, donc vers la droite selon une horizontale dans le plan de la figure 4.

En fonction de la distance X entre l'arête de pointe de bec 42 et une section transversale courante, de la dent 40, pour laquelle on considère le moment d'inertie, le moment d'inertie courant I, local dans la section considérée, présente d'abord un premier segment I1 à croissance selon une première loi, quadratique, sur une première plage de déplacement horizontal se terminant au droit de l'extrémité arrière 44 de l'arête sommitale antérieure 43.

Ensuite, au droit du tronçon intermédiaire de raccordement 45 ici courbe, le moment d'inertie I présente un deuxième segment I2, intermédiaire, avec une deuxième loi pour laquelle la croissance se poursuit de façon initialement plus limitée, du fait que le début de la courbe 45, proche du point de raccordement 44, présente une pente, de croissance d'épaisseur de la plaquette 10, qui est moindre que la pente de l'arête sommitale antérieure 43, par rapport à la direction du plan de la section considérée, c'est-à-dire une verticale sur la figure 4. En d'autres termes, le deuxième segment de courbe I2 reste en deçà d'une courbe d'extrapolation du premier segment I1 de courbe de moment d'inertie I.

Un troisième segment I3 de la courbe de moment d'inertie I, au droit de la plage corespondant à l'arête sommitale rectiligne postérieure 46, présente un supplément de croissance selon une troisième loi, de croissance quadratique. La troisième loi correspond sensiblement à la première loi, avec toutefois, d'une part, un décalage de la valeur de la variable de distance X, dû à la présence du décrochement associé au deuxième segment I2, et, d'autre part, une pondération (90d - F) de la croissance quadratique, qui est moindre, du fait que l'angle de dépouille postérieure F est ici supérieur à l'angle de dépouille antérieure D. Le début du troisième segment I3 est dans le prolongement de la fin du deuxième segment car le tronçon intermédiaire 45 présente un tronçon d'extrémité aligné sur l'arête postérieure 46.

Après le talon 47, un quatrième segment I4 de la courbe de moment d'inertie I correspond à une horizontale, c'est-à-dire un moment d'inertie I restant constant.

Lors du passage au niveau des gorges séparant les dents, la section droite courante pénètre donc dans le corps massif de la plaquette 10 et un cinquième segment I5 de la courbe d'inertie présente alors un échelon brusque montant jusqu'à un niveau constant lié à l'épaisseur de la plaquette 10.

En fait, les formes de courbes de moment d'inertie I ci-dessus sont des courbes "de base", correspondant à une tranche fictive de métal de la dent 40 qui serait taillée parallèlement au plan de la figure 4, c'est-à-dire qui aurait une largeur (ou épaisseur de tranche) constante, cette largeur étant mesurée perpendiculairement au plan de la figure 4. Dans le cas présent, la largeur de la dent 40, perpendiculairement au plan de la figure 4, varie selon trois paramètres.

Le premier paramètre est l'angle d'inclinaison de chaque branche du U, que forment les flancs 41F, par rapport à la direction d'extension de l'arête de pointe de bec 42, elle-même parallèle à la surface de la pièce usinée. Comme indiqué plus haut, l'arête de coupe 41A présente, en vue de dessus, de face, des branches de U montant en divergeant légèrement, c'est-à-dire chacune rabattue à par exemple 85 degrés par rapport à l'arête de bec 42 en fond du U. Ce premier paramètre, d'élargissement de la dent 40, tend donc à en augmenter le moment d'inertie en flexion, proportionnellement à cet élargissement.

Le deuxième paramètre est l'angle de dépouille des flancs 41F, qui, en descendant selon l'épaisseur de la dent 41A vers le plan de la face arrière 24, réduit la largeur de la dent 40 par rapport à la largeur de l'arête de coupe 41A. Ce deuxième paramètre tend donc à réduire le moment d'inertie I.

Le troisième paramètre est l'épaisseur de la partie antérieure 40A en fonction de la variable, c'est-à-dire la distance X à l'arête de pointe de bec 42, bien que cette épaisseur soit ici dessinée comme étant de valeur constante.

Il peut alors être prévu de régler mutuellement ces trois paramètres pour que le moment d'inertie I ne varie que de façon douce, voire reste sensiblement constant, afin d'éviter des ruptures de pente de sa courbe, susceptibles de correspondre à des positions de sections droites subissant des contraintes de cisaillement plus élevées qu'ailleurs et entraînant donc un risque de détérioration accélérée, en particulier avec les vibrations associées à l'usinage.

À cet effet, pour éviter ou limiter l'acuité de tout angle de point de raccordement entre les segments, le tronçon de raccordement 45 peut alors être modifié pour présenter un profil rectiligne, voire bombé ou, mieux, en S. Dans ce dernier cas, le tronçon de raccordement 45 comporte une partie antérieure convexe avec un tronçon d'extrémité antérieure s'étendant sensiblement selon la direction de l'arête antérieure 43 à laquelle il se raccorde, et comporte une partie d'extrémité postérieure concave, comme dessiné, s'étendant sensiblement selon la direction de l'arête postérieure 46 associée. Il n'y a donc pas alors de discontinuité dans l'évolution de la valeur du moment d'inertie I à chaque extrémité du deuxième segment de courbe I2. En outre, la forme de S peut être prévue pour que, entre les deux parties d'extrémité ci-dessus, la courbe I2 de moment d'inertie soit sensiblement rectiligne, limitant ainsi encore plus tout risque de contrainte localisée.

En ce qui concerne la croissance du troisième segment I3 de courbe d'inertie, au droit de l'arête postérieure 46, la divergence des branches du U de la dent 40 et l'angle de dépouille des flancs 41F ont, comme indiqué, des effets, respectivement positif et négatif, sur la variation de la largeur de dent, qui se traduisent sensiblement linéairement sur cette croissance. Un réglage du troisième paramètre, c'est-à-dire l'épaisseur courante de la partie antérieure 40A en fonction de la distance X à l'arête de pointe de bec 42, permet de lisser la courbe de moment d'inertie I. La détermination de l'épaisseur courante qui convient pour la partie antérieure 40A, en fonction de la valeur voulue du moment d'inertie I, s'effectue par une transformation inverse de la loi quadratique indiquée ci-dessus.

Par exemple, si l'angle de dépouille des flancs 41F reste constant sur toute la hauteur (horizontale sur la figure 4) de la dent 40, la largeur de la dent 40 va donc, par rapport à la courbe "de base" exposée plus haut, croître linéairement en allant, vers la droite, vers la racine de la dent 40. En outre, les deux flancs 40BF de la partie 40B, aussi en retrait par rapport à un plan prolongeant les flancs antérieurs 41F, présentent également un angle de dépouille F1, en particulier dans leur zone proche de l'arête postérieure 46 à considérer pour le troisième segment I3 de courbe d'inertie. Les flancs postérieurs 40BF contribuent de même à l'augmentation de l'inertie.

Le quatrième segment de courbe I4, correspondant à la base de la dent 40, présente de même une croissance pour les mêmes raisons que le troisième segment I3.

Pour augmenter l'inertie déterminée par le deuxième segment I2 et les suivants, il peut être prévu de limiter l'angle de dépouille F1 des flancs postérieurs 40BF à une valeur inférieure à celle de l'angle F de l'arête postérieure 46, tout comme cela a été exposé pour les flancs 41F.

## Revendications

1. Plaquette de filetage (10) comprenant une dent (30, 40) en saillie latérale comportant une face avant (31, 41), de taille et de repoussement de copeaux, délimitée par une arête de coupe (31A, 41A) la séparant d'une zone de flanc (33, 31F, 43, 41F) à profil (33, 43) présentant un angle de dépouille global déterminé (D), **caractérisée par le fait que** la dent comporte, en arrière d'une partie de volume antérieur (30A, 40A) supportant directement l'arête de coupe (31A, 41A) et limitée par la zone de flanc (33, 31F, 43, 41F) s'étendant sur une épaisseur limitée (h1), une partie (30B, 40B), de contrefort de la partie de volume antérieur (30A, 40A), présentant un profil (36, 45, 46) à angle moyen de dépouille (E, F) différent de l'angle de dépouille global (D) du profil (33, 43) de la zone de flanc (33, 31F, 43, 41F).

2. Plaquette selon la revendication 1, dans laquelle le profil de la partie de contrefort (30B, 40B) correspond à une courbe géométrique déterminée (36) qui se raccorde directement à une extrémité arrière (34) du profil (33) de la zone de flanc (33, 31F).

3. Plaquette selon la revendication 1, dans laquelle le profil (45, 46) de la partie de contrefort (40B) se raccorde, à une extrémité arrière (44) du profil (43) de la zone de flanc (40, 41F), par un tronçon de courbe à dépouille en décrochement (45), présentant un angle moyen de dépouille représentant un extremum par rapport au reste du profil (46) de la partie de contrefort (40B).

4. Plaquette selon la revendication 3, dans laquelle le dit reste du profil (46) de la partie de contrefort (40B) présente un angle moyen de dépouille (E) inférieur à l'angle de dépouille globale de la zone de flanc (43).

5. Plaquette selon l'une des revendications 3 et 4, dans laquelle le tronçon de courbe à dépouille en décrochement (45) présente un décrochement à extension latérale comprise entre 1 et 50 % d'une valeur de hauteur latérale de la dent (40).

6. Plaquette selon l'une des revendications 1 à 5, dans laquelle le profil (33, 43) de la zone de flanc (33, 31F, 43, 41F) est curviligne.

7. Plaquette selon l'une des revendications 1 à 6, dans laquelle la partie de volume antérieur (30A, 40A) présente une épaisseur (h1) comprise entre 10 et 50 % d'une valeur d'épaisseur de la plaquette.

8. Plaquette selon l'une des revendications 1 à 7, dans laquelle, la zone de flanc (33, 31F, 43, 41F) présentant diverses surfaces s'étendant sensiblement dans des plans respectifs inclinés selon des angles de biseau (B) différents par rapport à une direction de pénétration perpendiculaire à une surface de la pièce à usiner, l'angle de dépouille (D) de la zone de flanc (33, 33F, 43, 43F) suit une loi croissante en fonction de l'angle de biseau (B).

9. Plaquette selon la revendication 8, dans laquelle la loi de croissance représente sensiblement le sinus de l'angle de biseau (B).

10. Plaquette selon l'une des revendications 8 et 9, dans laquelle la loi comporte une constante de seuil minimum.

11. Plaquette selon l'une des revendications 1 à 10, dans laquelle le profil (36, 45, 46) de la partie de contrefort (30B, 40B) correspond, selon une loi déterminée de résistance à une flexion en arrière due à la taille, à une courbe lissée de moment d'inertie en flexion (I), en fonction d'une position courante en hauteur (X) dans la dent (30, 40), la courbe lissée présentant des ruptures de pente limitées à un valeur de seuil haut.

12. Plaquette selon la revendication 11, dans laquelle la partie de contrefort (30B, 40B) se raccorde, à une extrémité arrière (44) du profil (43) de la zone de flanc (40, 41F), par un tronçon de courbe à dépouille en décrochement (45), présentant un profil en S, à extrémités sensiblement alignées avec respectivement la dite extrémité arrière (44) et le reste du profil (46) de la partie de contrefort (30B, 40B).

13. Plaquette selon l'une des revendications 11 et 12, dans laquelle la dent (30, 40) présente latéralement un angle de biseau (B) d'élargissement déterminé à partir d'une arête de pointe de bec (32) et la partie de contrefort (30B, 40B) de la dent (30, 40) comporte deux flancs (40BF) à angle de dépouille (F1) variable selon une loi de croissance variant dans le même sens que le dit élargissement, et agencée pour lisser la dite courbe, de moment d'inertie (I), par compensation, au moins partielle, du dit élargissement.

14. Plaquette selon la revendication 13, dans laquelle la partie de volume antérieur (30A, 40A) de la dent (30, 40) présente une épaisseur variable selon une loi lissage agencée pour compenser, au moins partiellement, des variations du moment d'inertie (I) dues au dit élargissement et à l'angle de dépouille variable (F1) des deux flancs (40BF) de la partie de contrefort (30B, 40B).

15. Plaquette selon l'une des revendications 1 à 14, dans laquelle la partie de contrefort (30B, 40B) présente un retrait latéral, par rapport à la partie de volume antérieur (30A, 40A), correspondant à un angle moyen de dépouille qui est supérieur à l'angle de dépouille global (D) de la zone de flanc (33, 31F, 43, 41F).

16. Plaquette selon l'une des revendications 1 à 15, dans laquelle la partie de contrefort (30B, 40B) présente un angle moyen de dépouille (E, F) inférieur à l'angle de dépouille global (D) de la zone de flanc (33, 31F, 43, 41F).

17. Plaquette selon la revendication 16, dans laquelle l'angle de dépouille moyen (E, F) de la partie de contrefort (30B, 40B) est négatif pour que la partie de contrefort (30B, 40B) forme un rostre (37, 47), destiné à sensiblement épouser une courbure de pièce à surface externe cylindrique à fileter, le rostre (37, 47) s'étendant latéralement, vers la pièce à fileter, plus loin qu'un point de jonction (34, 44) entre la zone de flanc (33, 31F, 43, 41F) de la partie antérieure (30A, 40A) et une zone de flanc homologue présentant le dit profil (36, 45, 46) de la partie de contrefort (30B, 40B).

18. Plaquette selon la revendication 17, dans laquelle le rostre (37, 47) s'étend latéralement, vers la pièce à fileter, plus loin que l'arête de coupe (31A, 32, 41A, 42).
